# EUROPÄISCHE PATENTSCHRIFT

(11) **EP 0 587 826 B1**
(45) Veröffentlichungstag und Bekanntmachung des Hinweises auf die Patenterteilung: **01.05.1996**
(21) Anmeldenummer: 93901952.7
(22) Anmeldetag: 04.02.1993
(51) Int. Cl.: D21C 7/06, D21C 7/12

(54) **EINSPEISEVERFAHREN**
METHOD OF FEEDING BULK MATERIALS
PROCEDE D'ALIMENTATION

(30) Priorität: 04.02.1992 AT 186/92
(43) Veröffentlichungstag der Anmeldung: 23.03.1994
(73) Patentinhaber: ÖSTERREICHISCHE HOMOGENHOLTZ AKTIENGESELLSCHAFT, A-7201 Neudörfl/Leitha (AT)
(72) Erfinder: EPPLE, Albrecht, D-4700 Hamm 1 (DE)
(74) Vertreter: Dungler, Karin
(86) Internationale Anmeldenummer: AT9300014
(87) Internationale Veröffentlichungsnummer: WO9315262

(56) Entgegenhaltungen:
- EP-A- 0 389 230
- EP-A- 0 465 043
- DE-A- 861 963
- DE-A- 940 398
- FR-A- 1 222 132
- ULLMANNS Encyklopädie der technischen Chemie, 4. Aufl., Bd. 2, Seite 234

## Beschreibung

Die Erfindung betrifft ein Verfahren zum Einspeisen von Schüttgut, wie Holzspäne, Sägespäne oder Holzfasern in die Strömung eines unter hohem Druck und hoher Geschwindigkeit stehenden Gases oder Dampfes, insbesondere unter Verwendung eines Schneckenförderers, wobei das Einspeisen an einer Verengung des Querschnitts der Strömung erfolgt, an welcher der statische Druck der Strömung gegenüber dem im Mittel herrschenden statischen Druck stark herabgesetzt ist.

### Stand der Technik

Aus der EP-A-303068 (CONVERTECH) ist ein Verfahren zur Behandlung von lignozellulosehaltigem Material mit Dampf bekannt. Bei diesem Verfahren wird das lignozellulosehaltige Material in einer ersten Hydrolysestufe in einen Sattdampfkreislauf, in dem ein Druck von z.B. 20 bis 40 bar herrscht, eingebracht. Ein Problem dabei ist, diese Druckdifferenz mittels einer kontinuierlich arbeitenden Eintragvorrichtung zu überwinden. Stopfschneckenförderer, das sind Schneckenförderer, bei denen zur Abdichtung des Druckes das geförderte Material am Förderausgang einen komprimierten Pfropfen formt, können solche Druckdifferenzen allein nicht bewältigen. Es ist zwar aus der DE-AS 27 14 993 ein Verfahren beschrieben, bei dem durch geeignete Kombination der Stopfschneckenförderung mit einer intermitterenden Hubkolbenbewegung lignozellulosehaltiges Fasermaterial gegen einen Druck von etwa 21 bar eingetragen werden kann. Es handelt sich hier aber um keine kontinuierlich arbeitende Einrichtung.

Ferner ist es bekannt, daß das Zumischen von Feststoffen in eine Gasströmung in einer Venturidüse erfolgen kann, siehe DE-C-940398, Ullmanns Enzyklopädie der technischen Chemie 4.Aufl.,Band 2, Seite 234, EP-A-465043 und EP-A 389230. So können gemäß der DE-C-940398 bei der Papierherstellung Holzspäne unter Verwendung einer Venturidüse in eine Waschvorrichtung eingetragen werden. In dieser Waschvorrichtung wird das Einbringen der Holzspäne dadurch bewirkt, daß der Aufnahmebehälter für die aus einem Dampfbad kommenden Späne eine an sich bekannte Förderschnecke mit hohler, der Zuführung der Waschlauge dienender Welle aufweist, wobei die Schnecke bis in den Teil eines seitlich an den Behälter angeschlossenen venturirohrförmigen Gehäuses mit entsprechender Verengung hineinragt, an das sich seinerseits die zur Waschvorrichtung führende Förderleitung für das Gemisch aus Spänen und Lauge anschließt. Es hat sich jedoch gezeigt, daß bei einstufiger Einspeisung in Anbetracht der hohen statischen Drücke in der Hauptgasströmung eine Druckreduzierung dennoch zu gering ist.

### Darstellung der Erfindung

Der Erfindung liegt nun die Aufgabe zugrunde, ein Verfahren der eingangs genannten Art anzugeben, bei dem das Schüttgut in den Kreislauf, in dem ein statischer Druck von mehr als 15 bar herrscht, kontinuierlich eingebracht wird.

Diese Aufgabe wird in dem erfindungsgemäßen Verfahren gelöst, das dadurch gekennzeichnet ist, daß der Gas- oder Dampfstrom, in dem die Einspeisung des Schüttgutes erfolgt, einen Hilfsströmungskreis, in dem ein geringerer statischer Druck herrscht als in einem Hauptströmungskreis, und daß der mit dem Schüttgut beladene Gas- oder Dampfstrom an einer Verengung des Hauptströmungskreises in diesen eingeleitet wird. Dabei wird vorteilhaft der Hilfströmungskreis über eine Druckreduziereinrichtung vom Hauptströmungskreis abgeleitet. Als Druckreduziereinrichtung kann dabei vorteilhaft ein Reduzierventil oder aber auch eine Turbine eingesetzt werden.

### Kurze Beschreibung der Zeichnungen

Die Erfindung wird nachstehend anhand der Figuren näher erläutert.

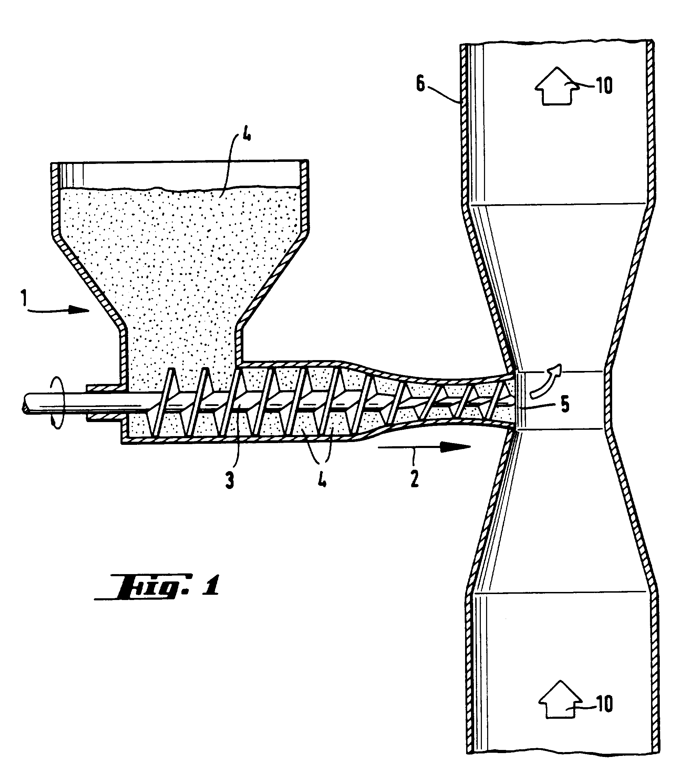

Fig. 1 zeigt in schematischer Darstellung eine Einspeisevorrichtung mit einstufiger Druckreduzierung, welche als Vergleich mit dem erfindungsgemäßen Verfahren dient. Mit 1 ist ein Schneckenförderer mit einer in Förderrichtung 2 sic: konisch verjüngenden Förderschnecke 3 bezeichnet, der Holzspäne 4 bei 5 in die Rohrleitung 6 einspeist, in dem Sattdampf oder überhitzter Dampf mit großer Geschwindigkeit zirkuliert. Die Rohrleitung 6 zeigt an der Einspeisestelle 5 eine Verengung auf, die so bemessen ist, daß die Strömungsgeschwindigkeit in ihr in die Nähe der Schallgeschwindigkeit kommt. Der statische Druck in der Verengung kann dadurch, wie sich zeigen läßt, - bedingt durch die Zunahme der kinetischen Energie der Strömung in der Verengung - auf etwa 50 - 60% des vor der Verengung in der Strömung herrschenden statischen Druckes herabgesetzt werden; beträgt der statische Druck vor der Verengung also z.B. 40 bar, so kann der statische Druck in der Verengung auf etwa 23 - 24 bar herabgesetzt werden, die bei der Einspeisung des Schüttgutes überwunden werden muß.

Da die Druckreduzierung in der Verengung aber noch immer zu gering ist, um ein kontinuierliches Einspeisen des Schüttgutes zu gewährleisten, kommt im erfindungsgemäßen Verfahren eine zweistufige Druckreduzierung zur Anwendung.

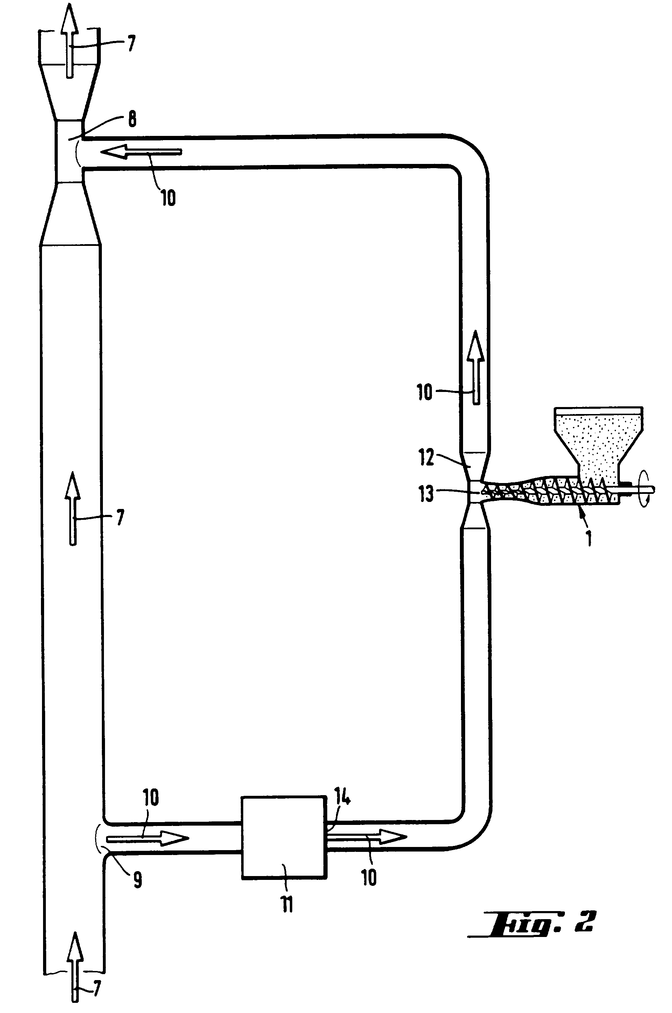

Fig. 2 zeigt eine derartige zweistufige Druckreduzierung. Mit 7 ist der Hauptströmungskreis angedeutet, in dem ein Venturirohr 8 eingeschaltet ist. Von diesem Hauptströmungskreis 7 zweigt bei 9 ein Hilfsströmungskreis 10 ab, der über eine Druckreduziereinrichtung 11, die vorteilhaft in Form eines regelbaren Reduzierventils ausgeführt sei kann, und ein weiteres Venturirohr 12 an der Verengung des Venturirohres 8 des Hauptströmungskreises 7 wieder in diesen zurückführt. Der Ausgang 13 des Schneckenförderers 1 ist an der Verengung des genannten Venturirohres 12 angeschlossen.

Während des Betriebes strömt z.B. im Hauptströmungskreis 7 Dampf mit einem Druck von 40 bar und einer Geschwindigkeit von 30 m/s. Dieser Druck wird an der Engstelle des Venturirohres 8 auf etwa 23 bar reduziert. Im vom Hauptströmungskreis 7 abgezweigten Hilfsströmungskreis 10 herrscht am Ausgang 14 der Druckreduziereinrichtung 11 ein statischer Druck von z.B. 24 bar, der in der Engstelle des Venturirohres 12 auf einen Wert von etwa nur 13 bar herabgesetzt wird, gegen den die Einspeisung des Schüttgutes erfolgt. Die mit dem Schüttgut beladene Hilfsströmung wird an der Engstelle des Venturirohres 8 in den Hauptströmungskreis eingeleitet.

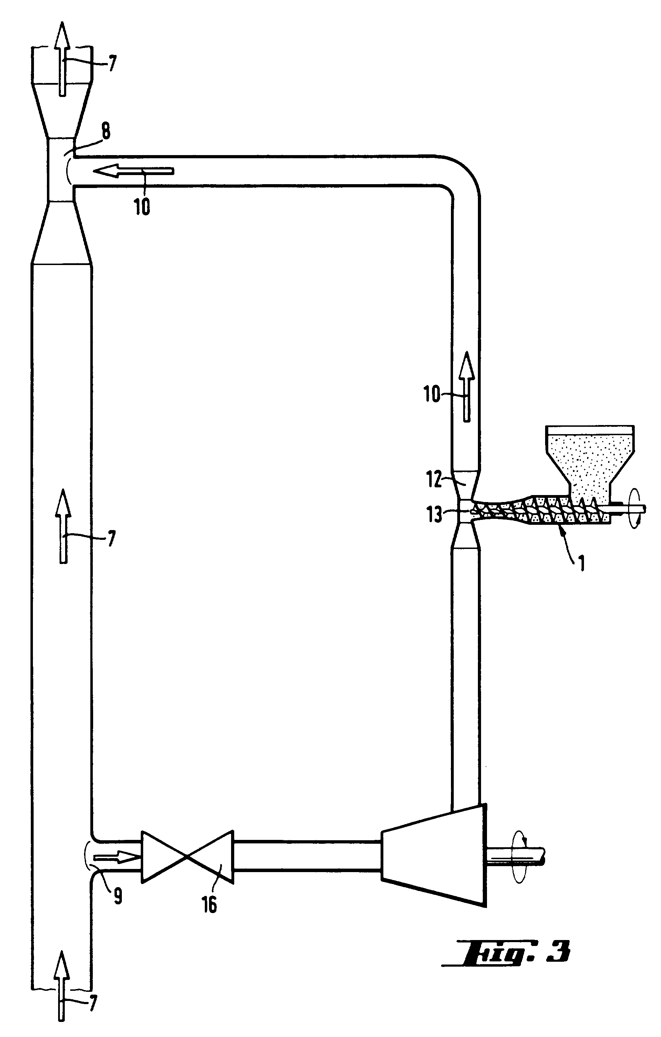

Gemäß einer anderen, in Fig. 3 skizzierten Ausgestaltung des erfindungsgemäßen Verfahrens weist die Druckreduziereinrichtung eine Turbine 15 mit vorgeschaltetem Absperrventil 16 auf, in der das Gas bzw. der Dampf von 40 auf 24 bar entspannt wird und die Turbine 15 dabei antreibt. Diese Variante hat den Vorteil, daß die mechanische Energie der Turbine 15 z.B. zum teilweisen Antrieb von Ventilatoren dienen kann, die die Strömung im Hauptströmungskreis aufrechterhalten.

### Gewerbliche Verwertbarkeit

Dieses Verfahren kann vorteilhaft zur Heißdampfbehandlung von lignozellulosehaltigem Material eingesetzt werden.

## Patentansprüche

1. Verfahren zum Einspeisen von Schüttgut, wie Holzspäne, Sägespäne oder Holzfasern in die Strömung eines unter hohem Druck und hoher Geschwindigkeit stehenden Gases oder Dampfes, insbesondere unter Verwendung eines Schneckenförderers, wobei das Einspeisen an einer Verengung des Querschnitts der Strömung erfolgt, an welcher der statische Druck der Strömung gegenüber dem im Mittel herrschenden statischen Druck stark herabgesetzt ist, dadurch gekennzeichnet, daß der Gas- oder Dampfstrom, in dem die Einspeisung des Schüttgutes erfolgt, einen Hilfsströmungskreis (10) bildet, in dem ein geringerer statischer Druck herrscht als in einem Hauptströmungskreis (7) und daß der mit dem Schüttgut beladene Gas- oder Dampfstrom an einer Verengung des Hauptströmungskreises (7) in diesen eingeleitet wird.

2. Verfahren nach Anspruch 1, dadurch gekennzeichnet, daß der Hilfsströmungskreis (10) über eine Druckreduziereinrichtung (11) vom Hauptströmungskreis (7) abgeleitet wird.

3. Verfahren nach Anspruch 2, dadurch gekennzeichnet, daß als Druckreduziereinrichtung ein Reduzierventil (11) verwendet wird.

4. Verfahren nach Anspruch 2, dadurch gekennzeichet, daß die Druckreduziereinrichtung eine Turbine (15) enthält.

5. Verfahren nach einem der Ansprüche 1 bis 4, dadurch gekennzeichnet, daß der mittlere statische Druck in Hauptströmungskreis höher als 15 bar ist.

## Claims

1. A method of feeding bulk material, such as wood chips, saw dust or wood fibres into a stream of gas or vapour at high pressure or high velocity, in particular using a screw conveyor, wherein the infeed takes place at a constriction in the flow cross-section, at which the static flow pressure is substantially reduced with respect to the prevailing mean static pressure, characterised in that the gas or vapour stream, in which the infeed of the bulk material takes place, forms an auxiliary circuit (10) in which a lower static pressure prevails than in a main circuit (7), and in that the gas or vapour stream laden with the bulk material is introduced into the main circuit (7) at a constriction therein.

2. A method according to Claim 1, characterised in that the auxiliary circuit (10) is diverted from the main circuit (7) via a pressure-reduction means (11).

3. A method according to Claim 2, characterised in that a reducing valve (11) is used as the pressure-reduction means.

4. A method according to Claim 2, characterised in that the pressure-reduction means includes a turbine (15).

5. A method according to any one of Claims 1 to 4, characterised in that the mean static pressure in the main circuit is higher than 15 bar.

## Revendications

1. Procédé d'injection de produits en vrac, tels que des copeaux, de la sciure ou des fibres de bois dans le flux d'un gaz ou d'une vapeur à haute pression et à grande vitesse, en particulier en utilisant une vis d'alimentation, dans lequel l'injection est réalisée dans un étranglement de la section transversale du flux, où la pression statique du flux est fortement réduite par rapport à la pression statique régnant dans le milieu, caractérisé en ce que le flux de gaz ou de vapeur, dans lequel se produit l'injection de produits en vrac, forme un circuit auxiliaire d'écoulement (10), dans lequel règne une pression statique plus faible que dans le circuit principal d'écoulement (7) et en ce que le flux de gaz ou de vapeur chargé du produit en vrac est introduit dans le circuit d'écoulement principal (7) à un étranglement de celui-ci.

2. Procédé selon la revendication 1, caractérisé en ce que le circuit d'écoulement auxiliaire (10) est dérivé du circuit principal d'écoulement (7) via un organe de réduction de pression (11).

3. Procédé selon la revendication 2, caractérisé en ce qu'on utilise comme organe de réduction de pression une valve de réduction (11).

4. Procédé selon la revendication 2, caractérisé en ce que l'organe de réduction de pression comporte une turbine (15).

5. Procédé selon l'une des revendications 1 à 4, caractérisé en ce que la pression statique moyenne dans le circuit d'écoulement principal est supérieure à 15 bars.
